**Europäisches Patentamt**

**European Patent Office**

**Office européen des brevets**

(19)

(11) Numéro de publication : **0 260 556 B2**

(12) # NOUVEAU FASCICULE DE BREVET EUROPEEN

(45) Date de publication du nouveau fascicule du brevet : **23.06.93 Bulletin 93/25**

(51) Int. Cl.⁵ : **D07B 1/06,** B60C 9/00

(21) Numéro de dépôt : **87113023.3**

(22) Date de dépôt : **05.09.87**

(54) **Assemblage de fils de renfort pour matières plastiques et/ou caoutchoucs comportant une âme; articles renforcés par ces assemblages.**

(30) Priorité : **15.09.86 FR 8612966**

(43) Date de publication de la demande :
**23.03.88 Bulletin 88/12**

(45) Mention de la délivrance du brevet :
**18.07.90 Bulletin 90/29**

(45) Mention de la décision concernant
l'opposition :
**23.06.93 Bulletin 93/25**

(84) Etats contractants désignés :
**AT BE CH DE ES FR GB GR IT LI LU NL SE**

(56) Documents cités :
**EP-A- 0 168 858**

(56) Documents cités :
**EP-A- 0 176 139**
**DE-A- 2 829 205**
**FR-A- 2 433 989**
**FR-A- 2 551 104**
**GB-A- 2 132 243**

(73) Titulaire : **MICHELIN & CIE (Compagnie**
**Générale des Etablissements Michelin)**
**Société dite:**
**4 rue du Terrail**
**F-63000 Clermont-Ferrand (FR)**

(72) Inventeur : **Charvet, Jean-Louis**
**25, rue Alfred de Musset**
**F-63000 Clermont-Ferrand (FR)**

(74) Mandataire : **Doussaint, Jean-Marie et al**
**MICHELIN & CIE Service K. Brevets**
**F-63040 Clermont-Ferrand Cedex (FR)**

EP 0 260 556 B2

**Description**

L'invention concerne les assemblages de fils utilisés pour renforcer des matières plastiques et/ou des caoutchoucs. De tels assemblages de renfort sont utilisés pour réaliser des articles qui sont par exemple des nappes de renfort, des courroies, des tuyaux, des enveloppes de pneumatiques.

L'expérience montre que lorsque ces assemblages ont une structure complexe constituée au moins en partie par une âme et deux couches entourant cette âme (voir par exemple FR-A 2 551 104, EP-A 176 139 ou DE-A 2 829 205), il est difficile d'avoir une structure régulière et compacte pour les raisons suivantes. Soit l'imbrication des fils d'une couche dans une autre est excessive, soit la place disponible pour les fils de la couche extérieure est insuffisante, ce qui produit dans les deux cas une désorganisation de l'assemblage car certains fils ont une position instable. Lors de la réalisation d'articles par combinaison de ces assemblages avec des matières plastiques et/ou des caoutchoucs, notamment lors d'une opération de calandrage, la pression exercée sur l'assemblage provoque un déplacement de ces fils instables dont la longueur devient excessive, cet excédent de longueur conduisant à la formation intermittente de boucles et à un mauvais comportement dynamique des articles.

D'autre part cette désorganisation conduit à une diminution notable des caractéristiques mécaniques de l'assemblage par suite d'une répartition hétérogène des contraintes.

Le but de l'invention est d'éviter ces inconvénients.

En conséquence, l'assemblage de renfort conforme à l'invention est caractérisé par les points suivants lorsqu'il est disposé de telle sorte que son axe soit rectiligne :

a) il comporte une âme constituée par une couche de fils ou par un coeur entouré par une couche de fils, cette couche étant appelée "couche d'âme" dans les deux cas ;

b) il comporte deux couches de fils adjacentes entourant la couche d'âme, la couche la plus proche de l'âme étant dite "couche intermédiaire", et la couche la plus éloignée de l'âme étant dite "couche extérieure" ;

c) la couche intermédiaire et la couche extérieure sont constituées chacune par des fils enroulés autour de l'axe de l'assemblage dans le même sens et avec le même pas ;

d) la couche intermédiaire et la couche extérieure ont le même sens d'enroulement et le même pas ;

e) la couche d'âme est constituée par des fils qui sont :

- soit parallèles à l'axe de l'assemblage ;
- soit enroulés autour de l'axe de l'assemblage dans le même sens et avec le même pas, les sens d'enroulement de la couche d'âme et de la couche intermédiaire étant opposés ;
- soit enroulés autour de l'axe de l'assemblage dans le même sens et avec le même pas, ce sens étant le même que celui de la couche intermédiaire, la couche d'âme et la couche intermédiaire ayant des pas qui diffèrent de telle sorte que le rapport entre la différence des valeurs de ces deux pas et la plus grande valeur de ces deux pas soit au moins égal à 0,30 ;

f) les fils de chaque couche ont le même diamètre ;

g) dans la couche intermédiaire, l'axe de chaque fil est pratiquement disposé autour de l'axe de l'assemblage selon une hélice circulaire telle que le rapport entre la valeur du rayon de courbure de cette hélice et la valeur du diamètre de ce fil soit inférieur à 75 ;

h) la couche intermédiaire comporte un espace résiduel, le rapport entre la valeur de cet espace résiduel et la valeur du diamètre des fils de la couche extérieure étant au moins égal à 0,30 et au plux égal à 0,45 ;

i) le nombre de fils de la couche extérieure est au moins égal à quinze.

L'invention concerne également l'assemblage précédemment défini lorsqu'il est imprégné d'une matière, par exemple d'un caoutchouc.

L'invention concerne également les articles renforcés par au moins un assemblage conforme à l'invention.

Les exemples qui suivent, ainsi que les figures toutes schématiques du dessin correspondant à ces exemples sont destinés à illustrer l'invention et à en faciliter la compréhension sans toutefois en limiter la portée.

Sur le dessin :

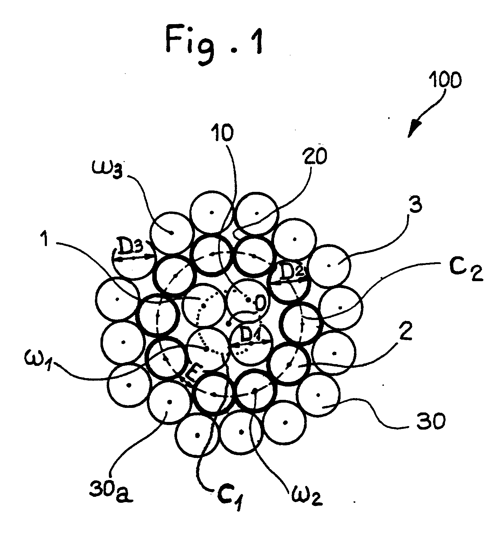

. La figure 1 représente en coupe un assemblage de renfort conforme à l'invention ;

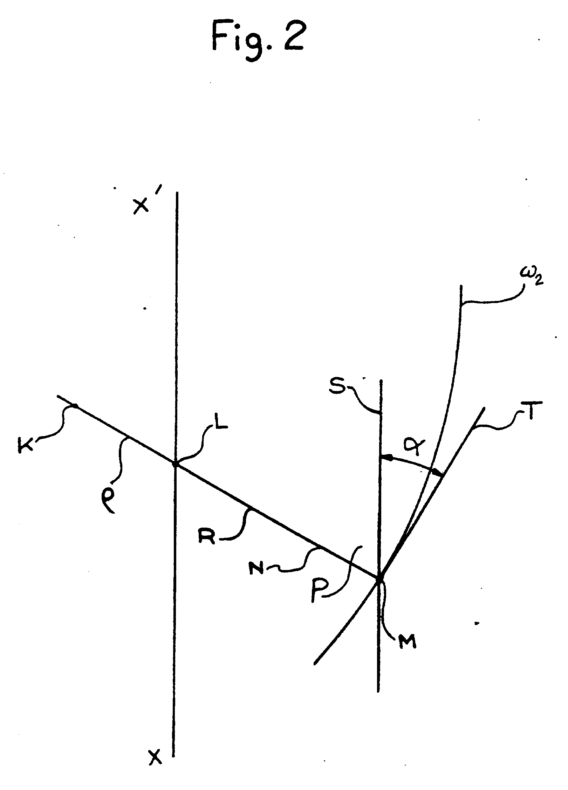

. La figure 2 représente, vue de profil, une portion de l'hélice décrite par l'axe d'un fil de la couche intermédiaire de l'assemblage représenté à la figure 1 ;

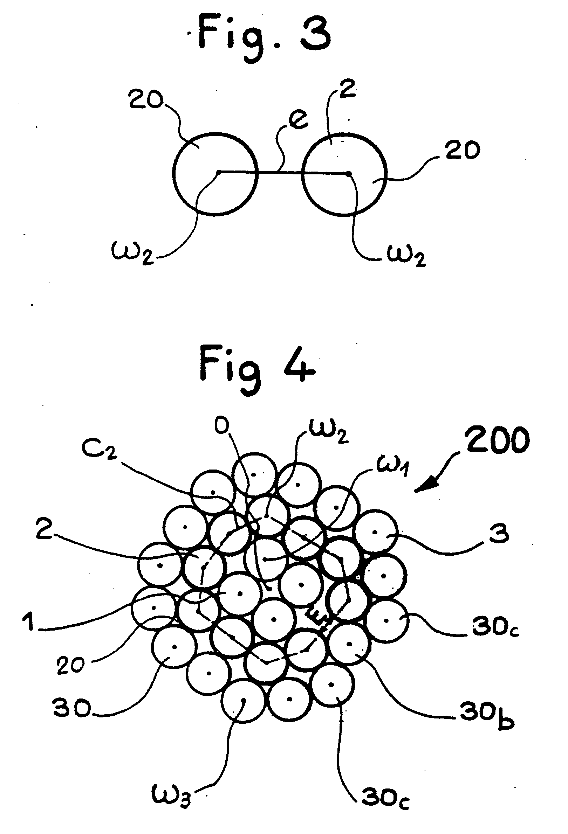

. La figure 3 représente en coupe un espace entre deux fils de la couche intermédiaire de l'assemblage représenté à la figure 1 ;

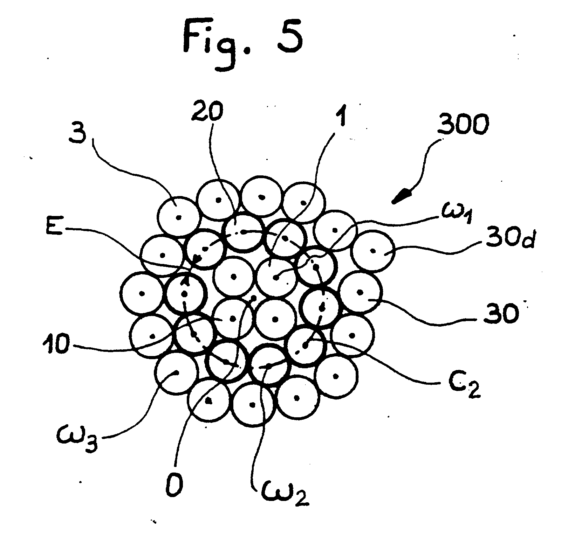

. Les figures 4 et 5 représentent chacune en coupe un assemblage de renfort non conforme à l'invention.

On voit à la figure 1 un assemblage 100 conforme à l'invention.

Cet assemblage 100 est constitué par trois couches de fils 1, 2, 3.

La couche 1 constitue à elle seule l'âme de l'assemblage 100, c'est donc une couche d'âme, et cette couche d'âme est constituée par les fils 10.

La couche 2 forme une couche intermédiaire et elle est constituée par les fils 20.

La couche 3 forme une couche extérieure et elle est cosntituée par les fils 30.

Les couches adjacentes 2, 3 entourent la couche d'âme 1, la couche intermédiaire 2 étant la plus proche de l'âme et la couche extérieure 3 étant la plus éloingée de l'âme, c'est-à-dire qu'elle entoure la couche intermédiaire 2.

Dans chacune des trois couches 1, 2, 3, les fils correspondants 10, 20, 30 sont enroulés autour de l'axe de l'assemblage dans le même sens et avec le même pas. La figure 1 est une coupe effectuée perpendiculairement à l'axe de l'assemblage 100, cet axe étant référencé par la lettre O sur cette figure 1, l'assemblage 100 étant disposé de telle sorte que l'axe O soit rectiligne.

Par définition le terme "pas de la couche" représente pour chaque couche 1, 2, 3 la longueur du pas d'enroulement des fils 10, 20, 30 dans cette couche. Le pas de la couche 1 est représenté par $p_1$, le pas de la couche 2 est représenté par $p_2$ et le pas de la couche 3 est représenté par $p_3$.

La couche intermédiaire 2 et la couche, extérieure 3 ont le même sens d'enroulement et le même pas, donc $p_2 = p_3$.

La couche d'âme 1 et la couche intermédiaire 2 sont enroulées dans le même sens mais les pas $p_1$ et $p_2$ sont différents. Cette différence est telle que le rapport entre la différence des valeurs de ces deux pas et la plus grande valeur de ces deux pas soit au moins égale à 0,30. A titre d'exemple, si le pas $p_2$ a une plus grande valeur que le pas $p_1$, on a donc $(p_2 - p_1)/p_2 \geq$ 0,30.

Les fils de chaque couche ont le même diamètre, les fils 10 de la couche d'âme 1, ayant le diamètre $D_1$, les fils 20 de la couche intermédiaire 2 ayant le diamètre $D_2$ et les fils 30 de la couche extérieure 3 ayant le diamètre $D_3$.

Dans la couche intermédiaire 2, l'axe de chaque fil 20 est pratiquement disposé autour de l'axe de l'assemblage 100 selon une hélice telle que le rapport entre la valeur du rayon de courbure de cette hélice et la valeur du diamètre de ce fil soit inférieur à 75.

La figure 2 représente une portion de l'axe $\omega_2$ d'un fil 20. Cet axe $\omega_2$ est enroulé en hélice autour de l'axe XX' supposé rectiligne de l'assemblage 100. M représente un point de cette hélice, T représente la tangente à l'hélice au point M, N représente la normale à l'hélice au point M, N coupant l'axe XX' au point L et étant perpendiculaire à cet axe, P représente le plan osculateur de l'hélice au point M, la tangente T et la normale N étant situées dans ce plan osculateur P, K représente le centre de courbure de l'hélice au point M et $\phi$ le rayon de courbure de l'hélice au point M, c'est-à-dire la distance KM. L'hélice $\omega_2$ est une hélice circulaire c'est-à-dire qu'elle est tangente à un cylindre de révolution d'axe XX' dit "cylindre enveloppe" dont la section par un plan perpendiculaire à l'axe XX' est un cercle. Le rayon de courbure $\phi$ a donc une valeur constante quel que soit le point M. S représente la droite passant par M et parallèle à l'axe XX', S et N étant perpendiculaires. L'angle aigu $\alpha$ défini en M par les droites T et S est l'angle de l'hélice $\omega_2$ avec la relation $\phi = R/\sin^2\alpha$, R étant la distance de M à l'axe XX', c'est-à-dire la distance LM et donc le rayon du cylindre enevloppe. Conformément à l'invention on a donc la relation $\phi/D_2 < 75$.

Pour la simplicité du dessin le cylindre enveloppe n'est pas représenté à la figure 2. Sur la figure 1 les axes des fils 10 sont représentés par $\omega_1$, lex axes des fils 20 par $\omega_2$ et les axes des fils 30 par $\omega_3$.

La figure 3 représente dans un plan perpendiculaire à l'axe XX' supposé rectiligne de l'assemblage 100 la coupe de deux fils 20 voisins dans la couche intermédiaire 2. Ces deux fils 20 sont séparés par un espace libre "e" mesuré selon la droite qui joint les axes $\omega_2$ de ces deux fils. Par définition, l'espace résiduel E est la somme de tous les espaces libres "e" mesurés dans un plan quelconque perpendiculaire à l'axe XX' supposé rectiligne de l'assemblage 100.

Le rapport entre la valeur de cet espace résiduel E et la valeur du diamètre $D_3$ des fils de la couche extérieure 3 est toujours au moins égal à 0,30 et au plus égal à 0,45, c'est-à-dire que quel que soit le plan perpendiculaire à l'axe XX' dans lequel on mesure l'espace résiduel E, on a la relation :
$0,30 \leq E/D_3 \leq 0,45$.

A la figure 1, tous les fils 20 de la couche intermédiaire 2 sont représentés au contact les uns des autres sauf deux de ces fils, l'espace résiduel E correspondant alors à l'espace libre entre ces deux fils.

L'espace résiduel E peut être calculé de la façon suivante. Soit $N_2$ le nombre donné par la relation :
$N_2 = \pi/\mathrm{arc\ sin}(D_2/2R\cos\alpha)$,
arc sin $(D_2/2R\cos\alpha)$ étant exprimé en radians, $D_2$, R, $\alpha$ ayant les significations données précédemment.

On a la relation :
$N_2 = n_2 + E$, dans laquelle $n_2$ est la partie entière de $N_2$ et correspond au nombre effectif de fils 20 dans la couche intermédiaire 2 et l'espace résiduel E correspond à la partie décimale de $N_2$.

A titre d'exemple, l'assemblage 100 a les caractéristiques suivantes, l'axe XX' étant supposé rectiligne :
- la couche d'âme 1 est constituée par quatre fils 10, la couche intermédiaire 2 est constituée par dix fils 20 et la couche extérieure 3 est constituée par seize fils 30 ; l'assemblage 100 a donc la formule 4 + 10 + 16 ; tous les fils 10, 20, 30 sont enroulés dans le même sens autour de l'axe XX' de l'assemblage, par exemple vers la gauche, c'est-à-dire dans le sens S ;
- les pas $p_1$, $p_2$, $p_3$ sont les suivants : $p_1 = 5,5$ mm ; $p_2 = p_3 = 11$ mm ; on a donc la relation

$(p_2 - p_1)/p_2 = 0,50$ ;
- tous les fils 10, 20, 30 sont des fils d'acier de même diamètre D = 0,18 mm, on a donc : $D_1$ = $D_2$ = $D_3$ = D = 0,18 mm ;
- dans la couche intermédiaire 2 le rayon de courbure $\phi$ de l'axe $\omega_2$ des fils 20 est égal à 10,3 mm, on a donc $\phi/D_2$ = 57 ;
- l'espace résiduel E est pratiquement toujours égal à 0,07 mm, c'est-à-dire que pour tout plan perpendiculaire à l'axe XX' de l'assemblage 100 on a pratiquement $E/D_3$ = 0,39.

La combinaison précise des caractéristiques (a) à (i) conforme à l'invention permet d'obtenir les avantages suivants pour l'assemblage 100.
- La valeur du rapport $\phi/D_2$ et du rapport $(p_2 - p_1)/p_2$ permet à la couche intermédiaire 2 d'avoir répartis de façon très régulière autour de la couche d'âme 1 ; dans tout plan perpendiculaire à l'axe XX' les axes $\omega_2$ de ces fils 20 sont pratiquement répartis sur un cercle $C_2$ de centre 0 (figure 1), le rayon de ce cercle $C_2$ étant pratiquement constant quel que soit ce plan.

L'égalité des pas $p_2 = p_3$ et les limites bien définies attribuées au rapport $E/D_3$ permettent aux deux couches 2, 3 de former un ensemble régulier, avec une légère imbrication d'un fil 30 de la couche extérieure 3 dans la couche intermédiaire 2 lorsque l'espace résiduel E est localisé uniquement entre deux fils 20 de cette couche. Sur la figure 1 ce fil imbriqué est référencé 30a. L'assemblage 100 a donc une structure compacte tout le long de son axe et sa structure est stable géométriquement même après réalisation d'un article par cominaison de cet assemblage 100 avec une matière plastique et/ou un caoutchouc, notamment par calandrage. Cette stabilité géométrique garantit une répartition homogène des contraintes lors de l'utilisation de l'assemblage 100 ainsi qu'un bon comportement dynamique de l'article.

Cet assemblage 100 peut être utilisé dans des enveloppes de pneumatiques. Il est particulièrement adapté à la réalisation de carcasses d'enveloppes de pneumatiques à charge élevée, destinées notamment auz véhicules poids lourds ou aux véhicules de génie civil, mais on peut l'utiliser pour d'autres usages, par exemple pour réaliser des armatures de sommet d'enveloppes de pneumatiques.

La figure 4 représente un assemblage 200 non conforme à l'invention, cette figure étant une coupe effectuée comme pour la figure 1, c'est-à-dire perpendiculairement à l'axe de cet assemblage, cet axe étant représenté par le point 0 à la figure 4. Cet assemblage 200 a, comme l'assemblage 100, la formule 4 + 10 + 16. Tous les fils d'acier 10, 20, 30 étant enroulés dans le même sens autour de l'axe, mais il présente avec l'assemblage 100 les différences suivantes :
- tous les fils 10, 20, 30 ont un diamètre de 0,22 mm :

- les pas vérifient les relations suivantes : $p_1$ = 9 mm ; $p_2$ = $p_3$ = 18 mm ;
- le rayon de courbure $\phi$ de l'axe $\omega_2$ des fils 20 est égal à 22 mm, c'est-à-dire qu'on a la relation $\phi/D_2$ = 100 ; - l'espace résiduel E est égal à 0,11 mm c'est-à-dire qu'on a la relation $E/D_3$ = 0,50.

Par suite de la valeur excessive de $\phi$ la ligne $C_2$ joignant les axes $\omega_2$ des fils 20 ne forme pas un cercle régulier dans tous les plans perpendiculaires à l'axe O, par suite d'une imbrication excessive des fils 20 dans la couche d'âme 1, et ceci bien que l'on ait encore la relation $(p_2 - p_1)/p_2 = 0,50$.

D'autre part, étant donné que le rapport $E/D_3$ est supérieur à 0,45, il se produit une imbrication excessive d'un fil extérieur 30 dans la couche intermédiaire 2, ce fil imbriqué étant référencé 30b sur la figure 4.

Lors de la réalisation d'un article par combinaison de cet assemblage 200 avec une matière plastique et/ou un caoutchouc, notamment par calandrage, la pression exercée alors sur l'assemblage 200 accentue l'imbrication de ce fil 30b qui passe dans la couche intermédiaire 2. Les deux fils 30c qui sont adjacents à ce fil 30b ne sont donc plus maintenus latéralement dans la couche extérieure 3 par le fil 30b étant donnée son imbrication. L'assemblage 200 n'est alors pas stable géométriquement et les deux fils 30c se déplacent latéralement sous l'effet de la pression exercée lors de la réalisation de l'article, ces deux fils 30c prenant une position telle que leur longueur devient excessive, cet excédent de longueur conduisant à la formation intermittente de boucles. Ces irrégularités géométriques conduisent à une répartition hétérogène des contraintes, lors de l'utilisation de l'assemblage 200, et à un mauvais comportement dynamique de l'article.

La figure 5 représente un autre assemblage 300 non conforme à l'invention, cette figure étant une coupe effectuée comme pour la figure 1, c'est-à-dire perpendiculairement à l'axe de cet assemblage, cet axe étant représenté par le point 0 à la figure 5.

Cet assemblage 300 a, comme l'assemblage 100, la formule 4 + 10 + 16, tous les fils d'acier 10, 20, 30 de diamètre 0,18 mm étant enroulés dans le même sens autour de l'axe, mais il présente avec l'assemblage 100 les différences suivantes :
- les pas vérifient les relations suivantes : $p_1$ = 4 mm ; $p_2$ = $p_3$ 8 mm ;
- le rayon de courbure $\phi$ de l'axe $\omega_2$ des fils 20 est égal à 5,6 mm, c'est-à-dire que l'on a la relation $\phi/D_2$ = 31;
- l'espace résiduel E est égal à 0,05 mm, c'est-à-dire que l'on a la relation $E/D_3$ = 0,28.

Etant donné les valeurs des rapports $\phi/D_2$ et $(p_2 - p_1)/p_2$, la ligne $C_2$ joignant les axes $\omega_2$ est un cercle de rayon pratiquement constant, quel que soit le plan de la figure 5. Cependant le rapport $E/D_3$ est inférieur à 0,30, ce qui conduit aux inconvénients suivants, par suite du nombre élevé de fils 30 dans la couche extérieure 3 et du fait que les pas $p_2$ et $p_3$ sont égaux. Un de ces fils 30, référencé 30d sur la figure 5, ne trouve plus sa place dans la couche extérieure 3 et n'est plus en appui sur les fils 20 de la couche intermédiaire 2. L'assemblage 300 n'est donc pas compact. Lors de la réalisation d'un article par combinaison de cet assemblage 300 avec une matière plastique et/ou un caoutchouc, notamment par calandrage, la pression exercée alors sur l'assemblage 300 tend à rapprocher le fil 30d de la couche intermédiaire 2 et la longueur de ce fil 30d devient excessive, cet excédent de longueur conduisant à la formation intermittente de boucles et donc aux inconvénients précédemment décrits pour l'assemblage 200.

Bien entendu, l'invention n'est pas limitée aux exemples précédemment décrits ; c'est ainsi que les assemblages conformes à l'invention peuvent par exemple présenter les caractéristiques suivantes :

- enroulements effectués dans des sens différents pour la couche d'âme et pour la couche intermédiaire, auquel cas il n'est pas nécessaire que les pas diffèrent pour ces deux couches, mais de préférence l'enroulement est effectué dans le même sens pour ces deux couches, comme précédemment décrit pour simplifier la réalisation des assemblages et améliorer leurs caractéristiques mécaniques ; il faut d'ailleurs remarquer que le pas de la couche intermédiaire peut être inférieur au pas de la couche d'âme, lorsque ces deux couches sont enroulées dans le même sens ;
- couche d'âme constituée par des fils parallèles à l'axe ;
- diamètre des fils variant d'une couche à l'autre ;
- âme comportant un coeur entouré par la couche d'âme, le coeur pouvant être constitué notamment par un ou plusieurs fils;
- formule différente de 4 + 10 + 16.

De préférence, dans une coupe perpendiculaire à l'axe d'un assemblage conforme à l'invention, les axes $\omega_1$ des fils 10 de la couche d'âme 1 sont pratiquement disposés sur un cercle $C_1$, représenté en pointillés à la figure 1, ce qui améliore la régularité géométrique.

Les assemblages conformes à l'invetion peuvent comporter éventuellement des frettes. Une telle frette est constituée, de façon connue par un fil, notamment un fil métallique, enroulé autour d'un assemblage en formant des spires non jointives, la frette ayant de préférence un pas plus court que celui de la couche extérieure de l'assemblage et un sens d'enroulement opposé à celui de cette couche extérieure.

D'autre part les assemblages conformes à l'invention peuvent être éventuellement associés à d'autres éléments de renfort, c'est ainsi par exemple que les assemblages conformes à l'invention peuvent constituer des âmes autour desquelles sont disposés des fils ou des torons de renfort pour réaliser des assemblages complexes de renfort.

Les assemblages conformes à l'invention peuvent être réalisés selon des procédés et avec des dispositifs connus, ces procédés et ces dispositifs n'étant pas décrits dans un but de simplification.

## Revendications

1. Assemblage de renfort caractérisé par les points suivants lorsqu'il est disposé de telle sorte que son axe soit rectiligne :

    a) il comporte une âme constituée par une couche de fils ou par un coeur entouré par une couche de fils, cette couche étant appelée "couche d'âme" dans les deux cas ;

    b) il comporte deux couches de fils adjacentes entourant la couche d'âme, la couche la plus proche de l'âme étant dite "couche intermédiaire", et la couche la plus éloignée de l'âme étant dite "couche extérieure" ;

    c) la couche intermédiaire et la couche extérieure sont constituées chacune par des fils enroulés autour de l'axe de l'assemblage dans le même sens et avec le même pas ;

    d) la couche intermédiaire et la couche extérieure ont le même sens d'enroulement et le même pas ;

    e) la couche d'âme est constituée par des fils qui sont :

    - soit parallèles à l'axe de l'assemblage ;
    - soit enroulés autour de l'axe de l'assemblage dans le même sens et avec le même pas, les sens d'enroulement de la couche d'âme et de la couche intermédiaire étant opposés ;
    - soit enroulés autour de l'axe de l'assemblage dans le même sens et avec le même pas, ce sens étant le même que celui de la couche intermédiaire, la couche d'âme et la couche intermédiaire ayant des pas qui diffèrent de telle sorte que le rapport entre la différence des valeurs de ces deux pas et la plus grande valeur de ces deux pas soit au moins égal à 0,30 ;

    f) les fils de chaque couche ont le même diamètre ;

    g) dans la couche intermédiaire, l'axe de chaque fil est pratiquement disposé autour de l'axe de l'assemblage selon une hélice circulaire telle que le rapport entre la valeur du rayon de courbure de cette hélice et la valeur du diamètre de ce fil soit inférieur à 75 ;

    h) la couche intermédiaire comporte un espace résiduel, le rapport entre la valeur de cet espace résiduel et la valeur du diamètre des fils de la couche extérieure étant au moins égal à 0,30 et au plus égal à 0,45 ;
i) le nombre de fils de la couche extérieure est au moins égal à quinze.

2. Assemblage de renfort selon la revendication 1 caractérisé en ce que les fils de la couche d'âme, de la couche intermédiaire et de la couche extérieure ont tous le même diamètre.

3. Assemblage de renfort conforme à l'une quelconque des revendications 1 ou 2 caractérisé en ce que l'âme est constituée par une couche de quatre fils, la couche intermédiaire est constituée par dix fils et la couche extérieure est constituée par seize fils, l'assemblage ayant donc la formule 4 + 10 + 16.

4. Assemblage de renfort conforme à l'une quelconque des revendications 1 à 3 caractérisé en ce qu'il est imprégné d'une matière plastique et/ou d'un caoutchouc.

5. Article renforcé par au moins un assemblage conforme à l'une quelconque des revendications 1 à 4.

6. Article selon la revendication 5 caractérisé en ce qu'il est une enveloppe de pneumatique.


**Patentansprüche**

1. Verstärkungsanordnung, die, wenn sie so ausgerichtet ist, daß ihre Achse geradlinig verläuft, durch die folgenden Punkte gekennzeichnet ist:
   a) Sie weist eine Seele auf, die aus einer Drahtschichte besteht oder aus einem Kern, der durch eine Schichte von Drähten umhüllt ist, wobei diese Schichte in beiden Fällen "Seelenschichte" genannt wird;
   b) sie weist zwei benachbarte Drahtschichten auf, die die Seelenschichte umhüllen, wobei die der Seele nächstliegende Schichte "Zwischenschichte" und die von der Seele entferntere Schichte "Außenschichte" genannt wird;
   c) die Zwischenschichte und die Außenschichte bestehen jeweils aus Drähten, die um die Anordnungsachse im gleichen Sinn und mit dem gleichen Schritt gewunden sind;
   d) die Zwischenschichte und die Außenschichte haben den gleichen Windungssinn und den gleichen Schritt;
   e) die Seelenschichte besteht aus Drähten, die:
      - entweder parallel zur Anordnungsachse sind;
      - oder um die Anordnungsachse im gleichen Sinn und mit dem gleichen Schritt gewunden sind, wobei der Windungssinn der Seelenschichte und der Zwischenschichte entgegengesetzt sind;
      - oder um die Anordnungsachse im gleichen Sinn und mit dem gleichen Schritt gewunden sind, wobei dieser Sinn der gleiche ist wie in der Zwischenschichte und wobei die Seelenschichte und die Zwischenschichte einen unterschiedlichen Schritt aufweisen, so daß das Verhältnis zwischen dem Unterschied der Werte dieser beiden Schritte und dem größeren der beiden Schritte zumindest gleich 0,30 ist;
   f) die Drähte jeder Schichte haben den gleichen Durchmesser;
   g) in der Zischenschichte verläuft die Achse jedes Drahtes um die Anordnungsachse praktisch entlang einer kreisförmigen Schraublinie so, daß das Verhältnis zwischen der Größe des Krümmungsradius dieser Schraublinie und der Größe des Durchmessers dieses Drahtes kleiner als 75 ist;
   h) die Zwischenschicht weist einen Restabstand auf, wobei das Verhältnis zwischen der Größe dieses Restabstandes und der Größe des Drahtdurchmessers der Drähte der äußeren Schichte zumindest gleich 0,30 und höchstens gleich 0,45 ist;
   i) die Anzahl der Drähte in der Außenschichte ist zumindest gleich 15.

2. Verstärkungsanordnung nach Anspruch 1, dadurch gekennzeichnet, daß die Drähte der Seelenschichte, der Zwischenschichte und der Außenschichte alle den gleichen Durchmesser aufweisen.

3. Verstärkungsanordnung nach einem der Ansprüche 1 oder 2, dadurch gekennzeichnet, daß die Seele aus einer Schichte von vier Drähten, die Zwischenschichte aus zehn Drähten und die Außenschichte aus sechzehn Drähten besteht, die Anordnung somit die Formel 4 + 10 + 16 hat.

4. Verstärkungsanordnung nach einem der Ansprüche 1 bis 3, dadurch gekennzeichnet, daß sie mit einem Kunststoff und/oder Kautschukmaterial imprägniert ist.

5. Gegenstand, der mit mindestens einer Verstärkungsanordnung nach einem der Ansprüche 1 bis 4 verstärkt ist.

6. Gegenstand nach Anspruch 5, dadurch gekennzeichnet, daß er eine Luftreifenhülle ist.

**Claims**

1. A reinforcement assembly characterized by the following features when it is so arranged that its axis is rectilinear:

   a) it comprises a core formed by a layer of cords or by a center surrounded by a layer of cords, said layer being referred to as "core layer" in both cases ;

   b) it comprises two adjacent layers of cords surrounding the core layer, the layer closer to the core being referred to as "intermediate layer" and the layer further apart from the core being referred to as "outer layer" ;

   c) the intermediate layer and the outer layer are each formed of cords wound around the axis of the assembly in the same direction and with the same pitch ;

   d) the intermediate layer and the outer layer have the same direction of winding and the same pitch ;

   e) the core layer is formed of cords which are :

   - either parallel to the axis of the assembly ;
   - or wound around the axis of the assembly in the same direction and with the same pitch, the directions of winding of the core layer and of the intermediate layer being opposite ;
   - or wound around the axis of the assembly in the same direction and with the same pitch, this direction being the same as that of the intermediate layer, the core layer and the intermediate layer having pitches which differ in such a manner that the ratio between the difference of values of these two pitches and the larger value of these two pitches is at least equal to 0.30 ;

   f) the cords of each layer have the same diameter ;

   g) in the intermediate layer, the axis of each cord is substantially disposed around the axis of the assembly along a circular helix such that the ratio between the value of the radius of curvature of said helix and the value of the diameter of said cord is less than 75 ;

   h) the intermediate layer includes a residual space, the ratio between the value of said residual space and the value of the diameter of the cords of the outer layer being equal to at least 0.30 and at most equal to 0.45 ;

   i) the number of cords in the outer layer is at least equal to fifteen.

2. A reinforcement assembly according to claim 1, characterized by the fact that the cords of the core layer, of the intermediate layer and of the outer layer, all have the same diameter.

3. A reinforcement assembly according to any one of claims 1 or 2, characterized by the fact that the core is formed of a layer of four cords, the intermediate layer is formed of ten cords and the outer layer is formed of sixteen cords, the assembly thus having the formula 4 + 10 + 16.

4. A reinforcement assembly according to any one of claims 1 to 3, characterized by the fact that it is impregnated with a plastic material and/or a rubber.

5. An article reinforced by at least one assembly according to any one of claims 1 to 4.

6. An article according to claim 5, characterized by the fact that it is a pneumatic tire.

Fig.1

# Fig. 2

Fig. 3

Fig 4

# Fig. 5